**Europäisches Patentamt**

(19) **European Patent Office**

**Office européen des brevets**

(11) Numéro de publication: **0 182 084 B1**

(12) **FASCICULE DE BREVET EUROPEEN**

(45) Date de publication du fascicule du brevet:
**18.10.89**

(51) Int. Cl.⁴: **A 21 D 13/08**

(21) Numéro de dépôt: **85112994.0**

(22) Date de dépôt: **14.10.85**

(54) Poudre pour la fabrication d'une pâte à fourrer.

(30) Priorité: **26.10.84 NL 8403261**

(73) Titulaire: **SOCIETE DES PRODUITS NESTLE S.A., Case postale 353, CH-1800 Vevey (CH)**

(43) Date de publication de la demande:
**28.05.86 Bulletin 86/22**

(72) Inventeur: **Wellinga, Peter, Hofstad 18, NL-4003 GC Tiel (NL)**
Inventeur: **Kim, Jong Chol, Dennenlaan 12, NL-6705 BX Wageningen (NL)**

(45) Mention de la délivrance du brevet:
**18.10.89 Bulletin 89/42**

(84) Etats contractants désignés:
**AT BE CH DE FR GB IT LI LU SE**

(56) Documents cités:
**EP-A- 0 113 174**
**FR-A- 2 150 535**
**GB-A- 2 090 515**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet une poudre pour la fabrication d'une pâte à fourrer pour pâtisseries, la pâte à fourrer elle-même et son procédé de fabrication.

On connaît FR-A 2 150 535 une poudre fluide convenant pour la préparation de pâtes à fourrer à utiliser en pâtisserie qui comprend principalement de la farine de soja, de l'amidon prégélatinisé, comprenant lui-même de préférence des quantités notables d'amidon de pommes de terre, et du sucre semoule ainsi que de petites quantités de triglydéride et d'agents épaississants, aromatisants, colorants et de conservation. Cette poudre connue additionnée de suffisamment d'eau pour obtenir une pâte à fourrer plastique était destinée à être utilisée comme succédané d'une pâte à fourrer disponible dans le commerce essentiellement à base de haricots blancs. Cette poudre connue n'a pas eu le succès escompté pour remplacer ladite pâte disponible dans le commerce. Il existe donc toujours un besoin pour un succédané d'une pâte à fourrer essentiellement à base de haricots blancs disponible dans le commerce.

Le but de la présente invention est donc de fournir un succédané de ladite pâte à fourrer disponible dans le commerce. Un autre but de la présente invention est de fournir un succédané à base de matières premières qui ne soient pas coûteuses.

A cet effet, la présente poudre convenant pour la fabrication de pâte à fourrer pour pâtisseries comprend en poids, 15 à 25 parties de granules de pommes de terre, 3 à 5 parties de matière grasse et 3 à 6,5 parties d'agent épaississant. De préférence, la présente poudre comprend en outre 45 à 58 parties en poids de sucre.

La présente pâte à fourrer pour pâtisseries comprend, en poids, 15 à 25 parties de granules de pommes de terre, 3 à 5 parties de matière grasse, 3 à 6,5 parties d'agent épaississant, 17 à 21 parties d'eau et 45 à 58 parties de sucre.

Le présent procédé de fabrication d'une pâte à fourrer pour pâtisseries est remarquable par le fait que l'on incorpore des granules de pommes de terre dans la pâte à fourrer en quantités telles que 89,5 à 93,5% en poids de la pâte se compose desdits granules de pomme de terre, d'eau et de sucre, le reste de la pâte comprenant matière grasse et agent épaississant. C'est ainsi que l'on peut mélanger, en parties en poids, 15 à 25 parties de granules de pommes de terre, 3 à 5 parties de matière grasse, 3 à 6,5 parties d'agent épaississant et 17 à 21 parties d'eau, laisser le mélange reposer durant 20 à 40 minutes et pétrir le mélange avec 45 à 58 parties de sucre.

On a constaté en effet de manière surprenante que les haricots blancs peuvent être remplacés entièrement et avec succès par des granules de pommes de terre dans la fabrication de pâte à fourrer pour pâtisseries.

Des granules de pommes de terre utilisables pour les présents produits et procédés peuvent être obtenus par un procédé dit «à recyclage» dans lequel les pommes de terre sont cuites, réduites en purée, séchées partiellement en les mélangeant avec des granules séchés recyclés puis séchées jusqu'à la teneur en humidité résiduelle désirée.

De même, dans les présents produits et procédés, un sucre adéquant peut être un sucre en poudre usuel, de préférence un sucre semoule. Une matière grasse adéquate peut être toute matière grasse comestible liquide à température ambiante, en particulier une huile végétale telle qu'une huile de soja. Un agent épaississant adéquant peut être un amidon prégélatinisé ou des gommes naturelles ou synthétiques, en particulier un amidon de blé prégélatinisé et/ou un amidon de riz cireux prégélatinisé. D'autres ingrédients pouvant être utilisés dans les présents produits et procédés sont par exemple des agents aromatisants et colorants, quoiqu'ils ne soient pas indispensables parce que les présentes poudres et pâtes à fourrer ont un goût doux et agréable et une couleur naturelle jaune pâle.

Des résultats particulièrement bons peuvent être obtenus en utilisant dans les présents produits et procédés des granules de pommes de terre produits par un procédé à recyclage et présentant un indice de couleur bleue compris entre 0 et 0,15. L'indice de couleur bleue est déterminé dans le présent contexte selon la procédure suivante:

1. On ajoute 5,00 g de produit à 500 ml d'eau distillée chauffée à 65°C.
2. On brasse durant 5 min de telle manière que le produit reste juste en suspension.
3. On filtre 150 ml de la suspension à travers un papier filtre plié et l'on jette les 50 premiers ml de filtrat.
4. On ajoute 10 ml de filtrat à 39 ml d'eau distillée et 1 ml de solution d'iode 0,02 N.
5. On étalonne le photomètre avec 1 ml de solution d'iode 0,02 N dans 49 ml d'eau distillée.
6. On mesure l'extinction avec le photomètre à 670 nm; la valeur d'extinction obtenue de cette manière est définie comme étant l'indice de couleur bleue.

La présente poudre convenant pour la fabrication de pâte à fourrer pour pâtisseries peut être fournie avec ou sans sucre, selon la conservabilité que la pâte à fourrer devrait avoir. Si une longue conservabilité n'est pas nécessaire, le sucre peut être incorporé à la poudre. Si une conservabilité d'au moins 3 mois est nécessaire, le sucre ne devrait pas être incorporé à la poudre. Pour produire une pâte à fourrer présentant une longue conservabilité, il est recommandé de mélanger tous les ingrédients sauf le sucre avec l'eau et de laisser le mélange reposer durant une $1/_2$ heure avant de pétrir avec le sucre.

C'est ainsi qu'un premier type de la présente poudre, avec sucre, est destiné à l'usage domestique pour lequel une longue conservabilité de la pâte à fourrer n'est pas nécessaire. Un autre type, sans sucre, est destiné à la production de la pâte à fourrer à longue conservabilité comparable à celle des pâtes à fourrer aux haricots blancs, c'est-à-dire à la fabrication de pâte à fourrer pour pâtisserie.

Les présentes poudres et pâtes à fourrer comprennent 15 à 25 parties en poids de granules de pommes de terre. Si l'on n'utilise pas des granules mais par exemple des flocons de pommes de terre, il faut utiliser trop d'eau pour fabriquer la pâte à fourrer qui n'est pas conservable, exige une cuisson plus longue, s'affaisse lorsqu'elle se refroidit et ne présente pas une texture satisfaisante qui devrait être courte et non collante, à savoir semblable à celle d'une pâte d'amande. Si l'on utilise moins de 15 parties de granules de pommes de terre, la pâte à fourrer devient trop sucrée, son aptitude à la cuisson n'est pas bonne, elle n'a pas de texture. Elle est semblable à un sirop de sucre. Si l'on utilise plus de 25 parties de granules de pommes de terre, la pâte à fourrer fraîchement fabriquée est bonne mais elle ne se conserve pas bien.

Les présentes poudres et pâtes à fourrer comprennent aussi 3 à 6,5 parties en poids d'agent épaississant, de préférence d'un amidon prégélatinisé ou de gommes naturelles ou synthétiques. Avec moins de 3 parties d'agent épaississant la texture de la pâte à fourrer devient trop lâche, la pâte ne présente aucune résistance sous la dent. Avec plus de 6,5 parties d'agent épaississant, la texture de la pâte à fourrer devient trop ferme et gommeuse.

Les 3 à 5 parties en poids de matière grasse jouent un rôle d'agent attendrissant dans la fabrication de la pâte à fourrer. Avec moins de 3 parties de matière grasse, la pâte à fourrer est trop dure. Avec plus de 5 parties de matière grasse, l'aptitude à la cuisson de la pâte est mauvaise, elle ne lève pas.

Comme décrit ci-dessus, les 45 à 58 parties de sucre peuvent consister en un sucre en poudre ordinaire, par exemple un sucre semoule. Il n'est pas nécessaire d'ajouter une certaine quantité de sucre plus grossier ou moins soluble pour obtenir la texture désirée de la pâte à fourrer. Si moins de 45 parties de sucre sont utilisées dans sa fabrication, la pâte à fourrer ne se conserve pas bien. Avec plus de 58 parties de sucre, la pâte à fourrer deviendra sèche et dure à cause de la cristallisation de sucre.

Les exemples ci-après sont présentés à titre d'illustration de la présente invention. Toutes les parties et pourcentages y sont donnés en poids. Sauf indication contraire, les granules de pommes de terre utilisés dans les divers exemples ont été obtenus par un procédé à recyclage et ils présentent un indice de couleur bleue de 0,085. De même, l'amidon prégélatinisé se compose de 50% d'amidon de blé prégélatinisé et de 50% d'amidon de riz cireux prégélatinisé. Les pourcentages indiqués entre parenthèses après les quantités respectives en g des différents ingrédients utilisés ont été calculés par rapport au poids total de pâte à fourrer fabriquée ou destinée à être fabriquée avec ces quantités d'ingrédients. L'extrudabilité des pâtes à fourrer a été contrôlée à l'aide d'une poche à décorer de ménage traditionnelle.

Exemple 1

On mélange intimement avec 67 g (18,64%) d'eau une poudre composée de 80 g (22,25%) de granules de pommes de terre, 18 g (5,01%) d'amidon prégélatinisé et 14,5 g (4,3%) d'huile de soja. On laisse reposer le mélange durant 30 min et on le pétrit avec 180 g (50,07%) de sucre semoule.

La pâte à fourrer pour pâtisseries obtenue de cette manière est bien extrudable. Elle présente une couleur jaune plaisante et un goût agréablement doux. Sa texture est courte, non collante et vraiment semblable à la texture d'une pâte d'amande. Après une conservation de 120 jours à 18°C, la pâte à fourrer n'a perdu aucune de ses qualités.

Pour déterminer son aptitude à la cuisson et ses qualités à la mastication, après la cuisson, on utilise la pâte à fourrer dans des tartes que l'on prépare de la manière décrite ci-après. Tout d'abord, on prépare une pâte à tarte en mélangeant les ingrédients suivants:

| | |
|---|---:|
| farine de blé | 4500 parties |
| margarine | 2420 parties |
| sucre semoule | 2250 |
| eau | 450 parties |
| bicarbonate de sodium | 45 parties |
| pyrophosphate disodique | 45 parties |

On abaisse ensuite la pâte à une épaisseur d'environ 2,5 mm. On découpe dans la feuille de pâte des disques d'environ 80 mm de diamètre. On dépose environ 30 g de pâte à fourrer sur chaque disque de pâte à tarte. On recouvre la pâte à fourrer d'un autre disque de pâte à tarte et l'on glace avec de l'œuf entier homogénéisé. On cuit les tartes 10 min à 240°C.

La forme, la couleur, la structure et le goût des tartes un jour après la cuisson sont bons et comparables à ceux de tartes préparées avec une pâte à fourrer essentiellement à base de haricots blancs disponible dans le commerce.

On emballe les tartes dans des feuilles de cellophane et on les conserve 30 j à 20°C. Les qualités organoleptiques et en particulier les qualités à la mastication des tartes après cette période de conservation sont pratiquement aussi bonnes que celles des tartes fraîches.

Exemple 2

On mélange avec 75 g d'eau une poudre composée des mêmes quantités en g de granules de pommes de terre, amidon prégélatinisé et huile de soja que la poudre de l'exemple 1. On traite le mélange de la même manière que le mélange de l'exemple 1.

En comparaison de la pâte à fourrer de l'exemple 1, la pâte à fourrer obtenue de cette manière est plus fluide mais encore bien extrudable. Sa couleur, son goût et sa texture sont pratiquement aussi beaux à l'état frais qu'après une conservation de 120 j à 18°C. De même, si on l'utilise dans des tartes, ses qualités à la mastication sont aussi bonnes après 1 j qu'après 30 j.

## Exemple 3

On fabrique et l'on déguste 2 pâtes à fourrer de manière semblable à cette décrite à l'exemple 1 à l'exception du fait que les granules de pommes de terre utilisés dans la première présentent un indice de couleur bleue de 0,02 et que les granules de pommes de terre utilisés dans la seconde présentent un indice de couleur bleue de 0,135 au lieu de 0,085.

En comparaison des pâtes à fourrer de l'exemple 1, les deux pâtes à fourrer obtenues de cette manière sont respectivement bonnes et acceptables, seules ou utilisées dans des tartes.

## Exemple 4

On prépare une poudre composée de 80 g (22,25%) de granules de pommes de terre, 18 g (5,01%) d'amidon prégélatinisé, 14,5 g (4,03%) d'huile de soja et 180 g (50,07%) de sucre semoule. On la mélange et on la pétrit avec 67 g (18,64%) d'eau.

La pâte à fourrer obtenue de cette manière est aussi bonne que la pâte à fourrer de l'exemple 1 à l'état frais. Mais elle ne se garde pas bien et elle devient dure après quelques semaines de conservation à 18°C. Si on l'utilise dans des tartes à l'état frais, ses qualités à la mastication sont aussi bonnes après 1 j mais ne sont plus acceptables après 30 j.

## Exemples 5 à 11

On mélange avec différentes quantités d'eau des poudres composées de différentes quantités de granules de pommes de terre, amidon prégélatinisé et huile de soja, on les laisse reposer 30 min et on les pétrit avec différentes quantités de sucre. On détermine de manière semblable à celle décrite à l'exemple 1 leur extrudabilité à l'état frais et après 120 j de conservation à 18°C ainsi que leurs qualités à la mastication après 1 j lorsqu'on les utilise dans des tartes. La composition des différentes poudres et des pâtes à fourrer ainsi que les qualités des pâtes à fourrer ainsi déterminées sont indiquées dans le tableau ci-après.

| Exemple No. | 5 | | 6 | | 7 | | 8 | | 9 | | 10 | | 11 | |
|---|---|---|---|---|---|---|---|---|---|---|---|---|---|---|
| Composition | g | % | g | % | g | % | g | % | g | % | g | % | g | % |
| Granules de pommes de terre | 73 | 21,01 | 80 | 21,50 | 80 | 23,06 | 80 | 20,23 | 80 | 18,50 | 80 | 17,11 | 80 | 24,4 |
| Amidon prégélatinisé | 18 | 5,18 | 23,5 | 6,32 | 11,5 | 3,31 | 18 | 4,55 | 18 | 4,16 | 18 | 3,85 | 18 | 5,50 |
| Huile de soja | 14,5 | 4,17 | 14,5 | 3,90 | 14,5 | 4,18 | 14,5 | 3,67 | 14,5 | 3,35 | 14,5 | 3,10 | 14,5 | 4,43 |
| Eau | 62 | 17,84 | 74 | 19,89 | 61 | 17,58 | 74 | 18,71 | 81 | 18,73 | 87 | 18,61 | 64 | 19,54 |
| Sucre semoule | 180 | 51,80 | 180 | 48,39 | 180 | 51,87 | 209 | 52,84 | 239 | 55,26 | 268 | 57,33 | 151 | 46,11 |
| Extrudabilité (état frais) | bonne | | bonne | | bonne | | bonne | | bonne | | bonne | | bonne | |
| Extrudabilité (après 120 jours) | correcte | | juste accepta-ble | | juste accepta-ble | | juste accepta-ble | | assez bonne | | assez bonne | | inaccep-table | |
| Qualités à la mastication en parties après 1 jour | correctes | | assez bonnes | | assez bonnes | | bonnes | | correctes | | juste accepta-bles | | correctes | |

L'exemple 5 présente une autre composition relativement bien équilibrée. Les exemples 6 et 7 illustrent le fait que l'on obtient toujours en pâte à fourrer adéquate si l'on varie la teneur en amidon prégélatinisé dans tout le domaine prescrit. Les exemples 8, 9 et 10 illustrent le fait qu'en augmentant progressivement la teneur en sucre on abaisse légèrement les qualités à la mastication des tartes après 1 j. L'exemple 11 montre qu'une pâte à fourrer à teneur en granules de pommes de terre nettement élevée est encore bonne mais ne se conserve pas longtemps.

## Exemple comparatif

On reproduit les essais des exemples 4 et 17 de FR-A 2 150 535 de manière à comparer les qualités organoleptiques, l'extrudabilité et les qualités à la mastication en tartes de ces pâtes à fourrer connues avec les qualités des présentes pâtes à fourrer. On constate que la pâte à fourrer selon ledit exemple 4 présente une texture collante, à savoir une texture homogène, lisse et visqueuse semblable à celle d'un pudding. La pâte à fourrer selon ledit exemple 17 présente une texture meilleure mais tout de même trop collante. A cause du goût de soja nécessairement prononcé on ne peut pas comparer la flaveur de ces pâtes à fourrer connues avec la flaveur des présentes pâtes à fourrer.

## Revendications

1. Poudre convenant pour la fabrication d'une pâte à fourrer pour pâtisseries, caractérisée par le fait qu'elle consiste, en parties en poids, en 15 à 25 parties de granules de pommes de terre, 3 à 5 parties de matière grasse, 3 à 6,5 parties d'agent épaississant et 45 à 58 parties de sucre.

2. Poudre selon la revendication 1, caractérisée par le fait que le sucre est un sucre semoule.

3. Poudre selon la revendication 1, caractérisée par le fait que la matière grasse est une huile végétale, notamment l'huile de soja.

4. Poudre selon la revendication 1, caractérisée par le fait que l'agent épaississant est un amidon prégélatinisé ou des gommes naturelles ou synthétiques, en particulier un amidon de blé prégélatinisé et/ou un amidon de riz cireux prégélatinisé.

5. Poudre selon la revendication 1, caractérisée par le fait que les granules de pommes de terre sont obtenus par un procédé à recyclage et présentent un indice de couleur bleue compris entre 0 et 0,15.

6. Pâte à fourrer pour pâtisseries, comprenant une poudre selon la revendication 1, caractérisée par le fait qu'elle comprend en outre 17 à 21 parties en poids d'eau.

7. Procédé de fabrication d'une pâte à fourrer pour pâtisseries, caractérisé par le fait que l'on mélange, en parties en poids, 15 à 25 parties de granules de pommes de terre, 3 à 5 parties de matière grasse, 3 à 6,5 parties d'agent épaississant et 17 à 21 parties d'eau, on laisse reposer le mélange durant 20 à 40 min et l'on pétrit le mélange avec 45 à 58 parties de sucre.

8. Procédé de fabrication d'une pâte à fourrer pour pâtisseries, caractérisé par le fait que l'on mélange, en parties en poids, 15 à 25 parties de granules de pommes de terre, 3 à 5 parties de matière grasse, 3 à 6,5 parties d'agent épaississant, 45 à 58 parties de sucre et 17 à 21 parties d'eau, et l'on pétrit le mélange.

9. Procédé selon l'une des revendications 7 et 8, caractérisé par le fait que 89,5 à 93,5% en poids de la pâte se compose desdits granules de pommes de terre, d'eau et de sucre.

10. Procédé selon l'une des revendications 7 at 8, caractérisé par le fait que le sucre est un sucre semoule.

11. Procédé selon l'une des revendications 7 et 8, caractérisé par le fait que la matière grasse est une huile végétale, notamment une huile de soja.

12. Procédé selon l'une des revendications 7 et 8, caractérisé par le fait que l'agent épaississant est un amidon prégélatinisé ou des gommes naturelles ou synthétiques, notamment un amidon de blé prégélatinisé et/ou un amidon de riz cireux prégélatinisé.

13. Procédé selon l'une des revendications 7 et 8, caractérisé par le fait que les granules de pommes de terre sont obtenus par un procédé à recyclage et présente un indice de couleur bleue compris entre 0 et 0,15.

## Patentansprüche

1. Zur Herstellung einer Füllmasse für Patisserien geeignetes Pulver, dadurch gekennzeichnet, dass es aus 15 bis 25 Gewichtsteilen Kartoffelkörnchen, 3 bis 5 Gewichtsteilen Fett, 3 bis 6,5 Gewichtsteilen Verdickungsmittel und 45 bis 58 Gewichtsteilen Zucker besteht.

2. Pulver nach Anspruch 1, dadurch gekennzeichnet, dass der Zucker ein Feinkristallzucker ist.

3. Pulver nach Anspruch 1, dadurch gekennzeichnet, dass das Fett ein Pflanzenöl ist, insbesondere Sojaöl.

4. Pulver nach Anspruch 1, dadurch gekennzeichnet, dass das Verdickungsmittel eine vorgelatinisierte Stärke oder natürliche oder synthetische Gummen sind, insbesondere eine vorgelatinisierte Weizenstärke und/oder eine vorgelatinisierte Stärke von wachshaltigem Reis.

5. Pulver nach Anspruch 1, dadurch gekennzeichnet, dass die Kartoffelkörnchen nach einem Kreislaufverfahren erhalten sind und einen Blau-Farbindex zwischen 0 und 0,15 aufweisen.

6. Füllmassen für Patisserien, die ein Pulver nach Anspruch 1 umfassen, dadurch gekennzeichnet, dass sie zusätzlich 17 bis 21 Gewichtsteile Wasser enthält.

7. Verfahren zur Herstellung einer Füllmasse für Patisserien, dadurch gekennzeichnet, dass man 15 bis 25 Gewichtsteile Kartoffelkörnchen, 3 bis 5 Gewichtsteile Fett, 3 bis 6,5 Gewichtsteile Verdickungsmittel und 17 bis 21 Gewichtsteile Wasser vermischt, das Gemisch 20 bis 40 Minuten lang ruhen lässt und das Gemisch mit 45 bis 58 Gewichtsteilen Zucker knetet.

8. Verfahren zur Herstellung einer Füllmasse für Patisserien, dadurch gekennzeichnet, dass man 15 bis 25 Gewichtsteile Kartoffelkörnchen, 3 bis 5 Gewichtsteile Fett, 3 bis 6,5 Gewichtsteile Verdickungsmittel, 45 bis 58 Gewichtsteile Zucker und 17 bis 21 Gewichtsteile Wasser vermischt und das Gemisch knetet.

9. Verfahren nach einem der Ansprüche 7 und 8, dadurch gekennzeichnet, dass 89,5 bis 93 Gewichts-% der Masse aus den genannten Kartoffelkörnchen, Wasser und Zucker bestehen.

10. Verfahren nach einem der Ansprüche 7 und 8, dadurch gekennzeichnet, dass der Zucker ein Feinkristallzucker ist.

11. Verfahren nach einem der Ansprüche 7 und 8, dadurch gekennzeichnet, dass das Fett ein Pflanzenöl ist, insbesondere ein Sojaöl.

12. Verfahren nach einem der Ansprüche 7 und 8, dadurch gekennzeichnet, dass das Verdikkungsmittel eine vorgelatiniserte Stärke oder natürliche oder synthetische Pflanzengummen ist, insbesondere eine vorgelatinisierte Weizenstärke und/oder eine vorgelatinisierte Stärke von wachshaltigem Reis.

13. Verfahren nach einem der Ansprüche 7 und 8, dadurch gekennzeichnet, dass die Kartoffelkörnchen nach einem Kreislaufverfahren erhalten sind und einen Blau-Farbindex 0 und 0,15 aufweisen.

**Claims**

1. A powder suitable for the manufacture of a filling mass for bakery products which comprises, by weight, 15 to 25 parts of potato granules, 3 to 5 parts of fat, 3 to 6.5 parts of thickening agent and 45 to 58 parts by weight of sugar.

2. A powder according to claim 1, wherein the sugar is castor sugar.

3. A powder according to claim 1, wherein the fat is a vegetable oil, especially soy oil.

4. A powder according to claim 1, wherein the thickening agent is pregelatinized starch or natural or synthetic gums, especially pregelatinized wheat starch and/or pregelatinized waxy rice starch.

5. A powder according to claim 1, wherein the potato granules are obtained by an add-back process and have a blue value index between 0 and 0.15.

6. A filling mass for bakery products comprising a powder according to claim 1 and 17 to 21 parts by weight of water.

7. A process for the manufacture of a filling mass for bakery products which comprises the steps of mixing together, the parts being by weight, 15 to 25 parts of potato granules, 3 to 5 parts of fat, 3 to 6.5 parts of thickening agent and 17 to 21 parts of water, allowing the mixture to rest for 20 to 40 min and kneading the mixture with 45 to 58 parts of sugar.

8. A process for the manufacture of a filling mass for bakery product which comprises the steps of mixing together, the parts being by weight, 15 to 25 parts of potato granules, 3 to 5 parts of fat, 3 to 6.5 parts of thickening agent, 45 to 58 parts of sugar and 17 to 21 parts of water, and kneading the mixture.

9. A process according to claims 7 or 8, wherein 89.5–93.5% by weight of the mass consists of said potato granules, sugar and water.

10. A process according to claims 7 or 8, wherein the sugar is castor sugar.

11. A process according to claims 7 or 8, wherein the fat is a vegetable oil, especially soy oil.

12. A process according to claims 7 or 8, wherein the thickening agent is pregelatinized starch or natural or synthetic sum, especially pregelatinized wheat starch and/or pregelatinized waxy rice starch.

13. A process according to claims 7 or 8, wherein the potato granules are obtained by and add-back process and have a blue value index between 0 and 0.15.